# EUROPÄISCHE PATENTSCHRIFT

(11) **EP 0 839 293 B1**
(45) Veröffentlichungstag und Bekanntmachung des Hinweises auf die Patenterteilung: **22.03.2000**
(21) Anmeldenummer: 96923982.1
(22) Anmeldetag: 10.07.1996
(51) Int. Cl.: F16H 1/46

(54) **PLANETENGETRIEBE**
PLANETARY GEAR
ENGRENAGE PLANETAIRE

(30) Priorität: 15.07.1995 DE 19525831
(43) Veröffentlichungstag der Anmeldung: 06.05.1998
(73) Patentinhaber: ZF FRIEDRICHSHAFEN Aktiengesellschaft, 88038 Friedrichshafen (DE)
(72) Erfinder: SCHULZ, Horst, D-88045 Friedrichshafen (DE); SOMSCHOR, Bernd, D-88069 Tettnang (DE)
(86) Internationale Anmeldenummer: EP9603005
(87) Internationale Veröffentlichungsnummer: WO9704249

(56) Entgegenhaltungen:
- EP-A- 0 627 575
- WO-A-95/04232
- US-A- 1 499 763
- US-A- 4 106 366
- US-A- 5 242 336
- MASCHINENMARKT, Nr. 20, 12.März 1982, WÜRZBURG, Seiten 341-344, XP000579592 B.KLEIN: "Theoretische Grundlagen zum Auslegen von Wolfromkoppelgetrieben" in der Anmeldung erwähnt

## Beschreibung

Die Erfindung bezieht sich auf ein Planetengetriebe mit einem angetriebenen Sonnenrad, zwei innenverzahnten Hohlrädern, von denen eines feststeht und das andere drehbar gelagert ist und den Abtrieb bildet. Es sind mehrere Planetenräder vorgesehen, die auf Planetenachsen in einem Planetenträger gelagert sind. Die Planetenräder stehen in ständigem Zahneingriff mit dem Sonnenrad und den Hohlrädern.

Viele Aufgabenstellungen in der Antriebstechnik verlangen die Realisierung extremer Übersetzungen. Planetengetriebe sind besonders gut geeignet, hohe Übersetzungen mit einer kompakten Bauweise zu vereinen. Ein derartiges Planetengetriebe stellt das Wolfrom-Koppelgetriebe dar, das bei einer hohen Übersetzung noch gute Wirkungsgrade aufweist. Als Wolfrom-Getriebe bezeichnet man ein besonderes, einfaches Koppelgetriebe. Der Antrieb ist mit einem Sonnenrad verbunden, das mit einem Planetenräderblock zusammenarbeitet. Das Planetenrad stützt sich an dem innenverzahnten Hohlrad ab, das gehäusefest ist. Der Steg als Planetenträger läuft leer mit. Die Bewegung wird über den Planetenträger und das/die Planetenrad/-räder (Stufenplanet) weitergeleitet. Das Planetenrad kämmt seinerseits wieder mit einem innenverzahnten Hohlrad, das den Abtrieb bildet. Die beschriebene Anordnung eignet sich für eine kompakte Bauweise, die auf engem Raum hohe Übertragungsdichten ermöglicht (vergleiche Klein: Theoretische Grundlagen zum Auslegen von Wolfrom-Koppelgetrieben, in Maschinenmarkt 1982, Seiten 341 bis 344).

Insbesondere in der Handhabungstechnik werden zur Leistungsübertragung von hochtourigen Antriebsmotoren hoch untersetzende Getriebe benötigt. Einen Anwendungsfall stellen Industrieroboter dar, bei denen Planetengetriebe eingesetzt werden. Für die Präzision eines Industrieroboters kommt dem Planetengetriebe eine zentrale Bedeutung zu. Es müssen präzise Bewegungsabläufe mit höchster Wiederholgenauigkeit gewährleistet sein. Für ein derartiges Planetengetriebe sind insbesondere folgende Kriterien von Bedeutung: geringes, einstellbares Verdrehspiel, hohe Steifigkeit, hoher Wirkungsgrad, niedrige Wärmeentwicklung, geringe Vibration und eine hohe Laufruhe. Der Gesamtwirkungsgrad ist ein mitentscheidendes Kriterium für die Brauchbarkeit des Planetengetriebes. Innere Verspannungen haben durch die resultierende, erhöhte innere Wälzleistung einen gravierenden Einfluß auf den Gesamtwirkungsgsrad.

Aus der US-PS 4 106 366 ist ein Planetengetriebe bekanntgeworden, bei dem ein innenverzahntes Hohlrad durch Schraubendruckfedern auf die konisch gefertigten Planetenräder gedrückt wird. Wegen der erhöhten Zahnwälzleistung durch innere Verspannungen wird hierbei der Gesamtwirkungsgrad unzulässig abgesenkt.

Ein Planetengetriebe mit Planetenrädern, die eine durchgehende Geradverzahnung aufweisen, ist ferner aus der US-PS 5 242 336 bekannt. Dieses Getriebe hat den Nachteil, daß ein relativ großer, eingriffsfreier axialer Zwischenraum zwischen den beiden Hohlrädern erforderlich ist, um den relativ großen Unterschied der Zähnezahlen beider Hohlräder ohne extreme Verzerrungen der Eingriffsverhältnisse auszugleichen. Dieser axiale Zwischenraum erhöht natürlich die axiale Baulänge des Getriebes und mindert dessen Steifigkeit. Von erheblichem Nachteil ist ferner die Zunahme an Massenträgheitsmoment, da die Planeten und der Planetenträger durch diesen Zwischenraum deutlich schwerer werden. Die dynamischen Eigenschaften dieses Antriebes werden durch diese Gestaltung verschlechtert, insbesondere, wenn die Planetenräder und der Planetenträger mit hohen Drehzahlen rotieren. Wollte man den erwähnten axialen Zwischenraum vermeiden, so wären erhebliche Verzerrungen der Eingriffsverhältnisse unvermeidbar. Extreme Werte im Profilverschiebungs-Faktor der Hohlräder führen zu spitzen Zahnlücken in den Hohlrädern, was sich auch ungünstig auf die Verzahnungswerkzeuge auswirkt. Weiterhin würden extreme Werte beim Betriebs-Eingriffswinkel zu Geräusch-, Reibmoment- und Verschleiß-Problemen führen.

Aus der europäischen Patentanmeldung 0 627 575 ist ein Wolfrom-Planetengetriebe bekanntgeworden, bei dem die Planetenräder axial in zwei unterschiedlich verzahnte Bereiche aufgeteilt sind. Die Teilkreisdurchmesser der beiden Verzahnungsbereiche können gleich oder ungleich sein. Die in den beiden Bereichen auftretenden Axialkräfte sollen durch gegensinnige Schrägverzahnungen etwa gegeneinander aufgehoben werden. Betrachtet man die auftretenden Zahnkräfte, so stellt man fest, daß sich die auftretenden Axialkräfte nicht gegenseitig aufheben, sondern sich zu einer Resultierenden addieren.

Bei dem Planetengetriebe nach der internationalen Patentanmeldung WO 95/04232 weisen die Planetenräder ebenfalls eine durchgehende Verzahnung auf. Der Vorteil dieser Anordnung besteht insbesondere darin, daß die Hohlräder in Axialrichtung unmittelbar aufeinanderfolgend angeordnet werden können. Dies gewährleistet eine hohe Steifigkeit des Getriebes, wenngleich der Unterschied in den Zähnezahlen der beiden Hohlräder klein sein sollte. Durch die Verzahnung mit durchgehend konstantem Profil der Zahnflanken an den Planeten müssen bei der gegenseitigen Abstimmung mit den Verzahnungen der beiden Hohlräder Kompromisse geschlossen werden.

Schließlich ist aus der US-PS 1 499 763 ein Getriebe gemäß Oberbegriff des Anspruchs 1 bekanntgeworden, bei dem die erreichbare Untersetzung außerordentlich groß sein soll. Hierzu wird vorgeschlagen, die Planeten mit zwei Ritzeln mit gleichen Teilkreisdurchmessern, unterschiedlichen Zähnezahlen und verschiedenen Modulen zu bestücken. Bei einer Ausbildung dieses Getriebes sind die Verzahnungsbereiche der Stufenplaneten zylindrisch ausgebildet. Die Achsen der Stufenplaneten sind gegenüber der Mittelachse des Getriebes geneigt, um die zylindrischen Verzahnungsbereiche an die konisch verzahnten Hohlräder anzupassen. Die radial geneigten Achsen der Stufenplaneten bewirken am Planetenträger einen Axialschub, der in entsprechenden Lagern aufgefangen wird. Diese Lager verursachen nicht nur Kosten, sondern vergrößern den Bauraum und das Gewicht. Bei größeren Lagerabmessungen wird zudem auch die Leerlaufreibung erhöht. Da sich die geneigten Achsen der Stufenplaneten mit der Mittelachse des Getriebes unter einem Winkel schneiden, ergibt sich, selbst unter günstigen Bedingungen, ein Flankenkontakt unter Punktberührung. Dies ist keine optimale Voraussetzung für die Geräuschentwicklung, die Tragfähigkeit und die korrekten Eingriffsverhältnisse eines Getriebes.

Vom vorstehend erläuterten Stand der Technik ausgehend liegt der Erfindung die Aufgabe zugrunde, ein Planetengetriebe zu schaffen, bei dem die Anzahl der Bauteile gering ist, das eine hohe Tragfähigkeit und Laufruhe und eine geringe Geräuschentwicklung aufweist. Die Reibungsverluste und die Massenträgheit sollen vermindert und die Herstell- und Montagekosten sollen gesenkt werden.

Diese Aufgabe wird mit einem, auch die kennzeichnenden Merkmale des Hauptanspruches aufweisenden, gattungsgemäßen Planetengetriebe gelöst.

Bevorzugte bauliche Ausgestaltungen sind den Unteransprüchen 2 bis 18 zu entnehmen.

Weitere, für die Erfindung wesentliche Merkmale sowie die hieraus resultierenden Vorteile sind der nachfolgenden Beschreibung eines Ausführungsbeispiels zu entnehmen.

Bei dem im Längsschnitt dargestellten Planetengetriebe 1 treibt eine hochtourig umlaufende Eingangswelle 2 ein Sonnenrad 3 (kleines Zentralrad) an. Das Sonnenrad 3 und die Eingangswelle 2 sind vorzugsweise einstückig hergestellt.

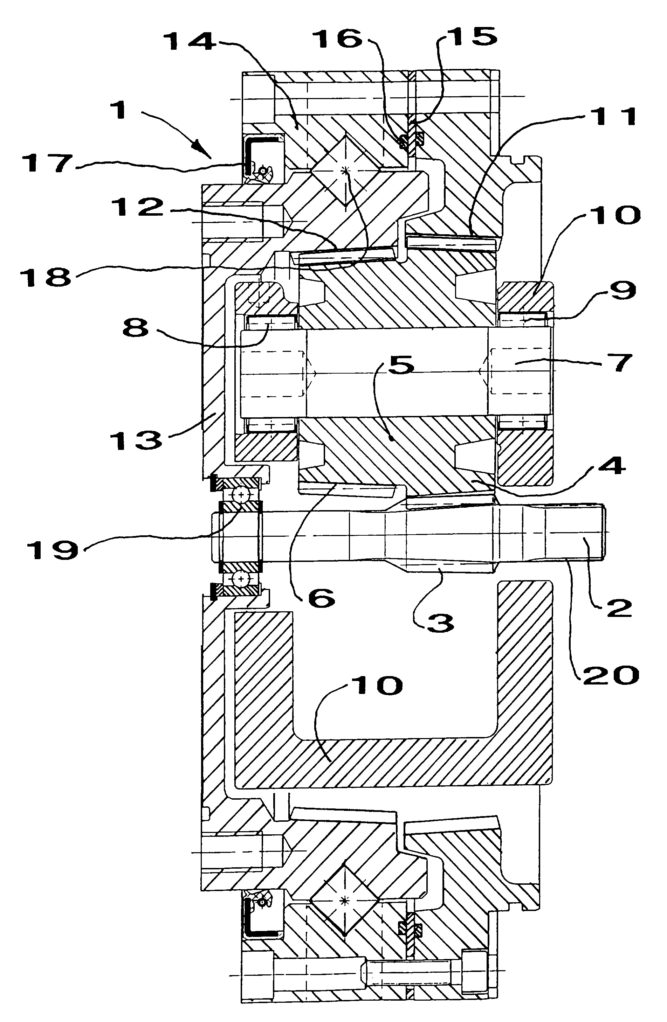

Das Sonnenrad 3 steht in ständig kämmender Verbindung mit großen Stufenrädern 4 mehrerer Stufenplaneten 5. Jeder Stufenplanet 5 wird durch ein kleines Stufenrad 6 vervollständigt. Einer der Stufenplaneten 5 ist in der Zeichnung abgebildet. Bevorzugt sind drei Stufenplaneten 5 vorgesehen.

Jeweils eine Achse 7 ist über Lager 8 und 9, vorzugsweise Nadellager, in einem Planetenträger 10 drehbar gelagert. Die Achse 7 verläuft parallel zur Eingangswelle 2. Jeder Stufenplanet 5 ist mit seiner Achse 7 drehfest und in Axialrichtung unverschiebbar gelagert. Jedoch sind der Stufenplanet und seine Achse gegenüber dem Planetenträger 10 axial verschieblich in den Lagern 8 und 9 angeordnet.

Die großen Stufenräder 4 der Stufenplaneten 5 stehen in ständig kämmender Verbindung mit einem ersten Hohlrad 11. Gleichzeitig stehen sie über die kleinen Stufenräder 6 ständig mit einem zweiten Hohlrad 12 im Eingriff.

Der Planetenträger 10 weist keine direkten Anschlußwellen auf, so daß kein Drehmoment zu- oder abgeführt wird. Er läuft demzufolge leer mit. Wesentlich ist, daß der Planetenträger 10 nicht eigens über ein gesondertes Lager radial abgestützt ist.

Das erste Hohlrad 11 ist feststehend angeordnet, während das zweite Hohlrad 12 mit einem Abtriebsflansch 13 fest verbunden ist. Aus der Zeichnung ist ersichtlich, daß das zweite Hohlrad 12 und der Abtriebsflansch 13 einstückig gefertigt sind.

Ein ringförmiges Gehäuse 14 ist mit dem ersten Hohlrad 11 über Befestigungselemente (nicht dargestellt) fest verbunden. Beispielsweise eignen sich hierzu Schraubverbindungen. Zwischen den Anschlußflächen des ersten Hohlrades 11 und des ringförmigen Gehäuses 14 ist eine Distanzscheibe 15 eingelegt. Ferner ist über geeignete Dichtungen, beispielsweise 0-Ringe 16, für eine dichte Verbindung zwischen dem ersten Hohlrad 11 sowie dem ringförmigen Gehäuse 14 und der Distanzscheibe 15 gesorgt.

Um das Planetengetriebe 1 vor äußeren Einflüssen zu schützen, ist zwischen dem Gehäuse 14 und dem Abtriebsflansch 13 eine Dichtung, vorzugsweise ein Radialwellendichtring 17, eingeschaltet.

Das zweite Hohlrad 12 und damit auch der Abtriebsflansch 13 sind über ein einziges Wälzlager, das vorzugsweise als Kreuzrollenlager 18 ausgebildet ist, im ringförmigen Gehäuse 14 drehbar und in Axialrichtung feststehend gelagert. Anstelle des Kreuzrollenlagers bieten sich für den Fachmann andere Bauformen an. Beispielsweise könnten das zweite Hohlrad 12 und der Abtriebsflansch 13 über je ein Rillenkugellager im ringförmigen Gehäuse 14 abgestützt sein.

Die Eingangswelle 2 bzw. das Sonnenrad 3 ist über ein Wälzlager 19 in einem der beiden Hohlräder 11 oder 12 gelagert. Im gezeichneten Ausführungsbeispiel erfolgt die Lagerung im Abtriebsflansch 13 bzw. im zweiten Hohlrad 12. Das gegenüberliegende Ende der Eingangswelle 2 ist mit einer Mitnahmeverzahnung 20 versehen, über die der Antrieb, beispielsweise durch einen Elektromotor, erfolgt.

Eingangs wurde bereits erwähnt, daß der Planetenträger 10 keine direkten Anschlußwellen aufweist und demzufolge leer mitläuft und auch nicht über gesonderte Lager gelagert ist. Diese Besonderheit ist auf die erfindungsgemäße Konstruktion zurückzuführen, die sich insbesondere durch folgende Merkmale auszeichnet:

### Stufenplanet 5:

Die Verzahnungen der Stufenräder 4 und 6 eines Stufenplaneten 5 verlaufen konisch. Vorzugsweise sind die Verzahnungen zudem schrägverzahnt. Jede der Verzahnungen der Stufenräder 4 und 6 sind steigungsgleich, das heißt, die Verzahnung mit dem größeren Durchmesser weist den größeren Schrägungswinkel auf.

Die Konus-Richtungen der Verzahnungen der Stufenräder 4 und 6 sind zueinander entgegengesetzt gewählt, wie dies der Zeichnung zu entnehmen ist.

Erhebliche Kostenvorteile ergeben sich, wenn die Stufenräder 4 und 6 Verzahnungen mit jeweils gleichen Zähnezahlen aufweisen. Damit ergeben sich auch sehr einfache Montageabläufe, da es nicht erforderlich ist, daß ein bestimmter Zahn der Stufenräder in eine bestimmte Zahnlücke eines Hohlrades 11 oder 12 montiert werden muß. Auch bei der Herstellung der Verzahnungen muß keine bestimmte Stellungszuordnung beachtet werden, sofern nur die Stellungszuordnung für alle Stufenplaneten 5 eines Getriebes gleich ist. Im Ergebnis werden die Herstell- und Montagekosten erheblich gesenkt.

Günstige Wirkungsgsrade und ein über eine große Betriebsdauer gleichbleibendes - enges - Getriebespiel sind erzielbar, wenn die Verzahnungen der Stufenräder 4 und 6 bzw. Hohlräder 11 und 12 unterschiedliche Module aufweisen. Die Modul-Unterschiede werden so gewählt, daß sich annähernd gleiche Betriebseingriffswinkel ergeben. Kleine Betriebseingriffswinkel, die ungünstige Reibungsverhältnisse ergeben, oder zu große Betriebseingriffswinkel, die ein ungünstiges Laufverhalten bzw. zu Geräuschentwicklung führen, werden so vermieden.

Kleine Fertigungstoleranzen der Stufenplaneten untereinander lassen sich ausgleichen, weil die Stufenplaneten mit axialem Spiel im Planetenträger gelagert sind. Jeder Stufenplanet kann für sich in seiner eigenen, in Axialrichtung idealen Spur laufen, in der sich die Spiele der Verzahnungen zwischen den Stufenrädern und den mit ihnen in Eingriff stehenden Hohlrädern annähernd gleich verteilen. Dies gilt insbesondere auch unter dem Einfluß von elastischen Verformungen der Bauteile und auch sonstiger Faktoren, die das Verzahnungsspiel beeinflussen. Dies bedeutet auch eine einfachere Montage des Getriebes. Eine gleichmäßige Verteilung des Verzahnungsspieles muß nicht durch aufwendige Justierarbeiten herbeigeführt werden.

### Hohlräder 11 und 12:

Die Verzahnungen der Hohlräder 11 und 12 verlaufen ebenfalls konisch und sind vorzugsweise als Schrägverzahnungen ausgebildet. Auch für die Hohlräder 11 und 12 gilt, daß deren Verzahnungen steigungsgleich sind, so daß die Verzahnung mit dem größeren Durchmesser den größeren Schrägungswinkel aufweist.

Durch die entgegengesetzt gerichteten Konus-Richtungen der Verzahnungen der Hohlräder 11 und 12 ist es möglich, die aus den Zahneingriffen beider Hohlräder resultierenden Axialkräfte gegeneinander zu richten und so in ihrer Wirkung nahezu aufzuheben. Die Stufenräder 4 und 6 der Stufenplaneten 5 werden durch die axialen Führungskräfte der beiden konisch verzahnten Hohlräder 11 und 12 in ihrer optimalen Position gehalten.

Es ist vorteilhaft, wenn der Unterschied der Zähnezahlen der Hohlräder 11 und 12 doppelt so hoch ist wie die Anzahl der Stufenplaneten 5. Durch diese Auslegung lassen sich die getriebeinternen Wälzleistungen, die Reibungsverluste, die Verzahnungsgeschwindigkeiten, die Drehzahlen der rotierenden Teile und die Massenträgheitsmomente herabsetzen. In diesem Fall ist dann zwar eine bestimmte Teilübersetzung, ausgedrückt durch das Verhältnis der Drehzahl des Planetenträgers 10 zur Drehzahl des Abtriebsflansches 13, entsprechend geringer. Dies würde die Gesamtübersetzung des Getriebes an sich zunächst herabsetzen, wenn sie nicht, was häufig der Fall ist, durch andere Maßnahmen gesteigert werden kann. Zu diesen Maßnahmen zählen beispielsweise kleinere Zähnezahlen des Sonnenrades und/oder größere Zähnezahlen an beiden Hohlrädern 11 und 12. Insgesamt erhält man bei ausreichender Gesamtübersetzung ein leiseres Getriebe mit einem höheren Gesamtwirkungsgrad.

### Planetenträger 10:

Ein besonderes Führungslager für den Planetenträger 10 entfällt. Hierdurch entfällt nicht nur ein teures Bauteil, sondern es werden auch keine Exzentrizitäten durch das Lager bzw. den Lagersitz auf die Verzahnungen übertragen. Durch den Entfall der Überbestimmtheit, die bei einer gesonderten Lagerung des Planetenträgers vorliegt, wird ein zusätzlicher Freiheitsgrad gewonnen. Zwangspunkte entfallen. Bei engen Flankenspielen und verformungsbedingten Verlagerungen bedeutet dies einen großen Vorteil, denn es wird sozusagen die ideale Mitte gefunden. Der Leerlaufwiderstand des Lagers entfällt naturgemäß. Das Massenträgheitsmoment wird reduziert. Jeder Stufenplanet 5 kann sich selbst zentrieren und wiederum alle drei Stufenplaneten nehmen den Planetenträger mit. Der Planetenträger kann sich über die in ihm mit axialem Spiel gelagerten Stufenplaneten frei gegenüber den Hohlrädern 11 und 12 axial einstellen.

### Distanzscheibe 15:

Die Distanzscheibe 15 schafft - in Verbindung mit den entgegengesetzt gerichteten konischen Verzahnungen der Hohlräder 11 und 12 - eine kostengünstige, jedoch sehr effektive Einstellmöglichkeit für das Zahnflankenspiel der Verzahnungen des Stufenplaneten 5 in bezug auf die Verzahnungen der Hohlräder 11 und 12. Die Dicke der Distanzscheibe 15 kann, je nach den ermittelten Fertigungsmaßen der beteiligten Zahnräder und dem gewünschten Zahnspiel, für jedes Getriebe individuell angepaßt werden. Bei dem gewünschten Zahnspiel kann es sich um leichtes Spiel oder aber auch um eine angemessene Vorspannung handeln. Das über die Distanzscheibe 15 eingestellte Gesamtspiel verteilt sich selbsttätig auf beide Hohlradeingriffe, da die Axialkräfte durch die Wahl passender Konus-Neigungswinkel gezielt beeinflußbar sind und so ausgewogen gehalten werden können.

Insbesondere bei enger Spieleinstellung sollte beachtet werden, daß der Konus-Neigungswinkel an jedem Hohlrad 11 bzw. 12 - in der Berührungszone der Zahnflanke gemessen - mindestens 20 % des Teilkreis-Schrägungswinkels des betreffenden Hohlrades beträgt. Damit können unerwünschte Instabilitäten der auftretenden Reibung, hervorgerufen durch das Zusammenwirken von Konus-Neigungswinkel und -Schrägungswinkel, vermieden werden. In jedem Fall ist sichergestellt, daß sich das Getriebe nicht selbsttätig festlaufen kann.

Für das in der Zeichnung abgebildete Ausführungsbeispiel eines erfindungsgemäßen Planetengetriebes gilt:

| Hohlrad 12: | |
|---|---|
| Zähnezahl | 109 |
| Modul | 1,96 |
| Schrägungswinkel | 10°8'52", rechts |
| Konus-Neigungswinkel | 3° |

| Hohlrad 11: | |
|---|---|
| Zähnezahl | 103 |
| Modul | 2,14 |
| Schrägungswinkel | 11°5'30", rechts |
| Konus-Neigungswinkel | 3° |

| Stufenplanet 5: | |
|---|---|
| Zähnezahl der | |
| Stufenräder 4 und 6 | jeweils 46 |

| Sonnenrad 3: | |
|---|---|
| Zähnezahl | 11 |

Der Planetenträger 10 kann auch anstelle des Sonnenrades 3 über eine vergleichbare Räderanordnung bzw. Räderkette angetrieben werden. Diese liefert eine vergleichbare Vorübersetzung. Beispielsweise kann der Antrieb über eine Kegelradstufe erfolgen. Ebenso ist es möglich, An- und Abtrieb zu vertauschen, wobei sich die Drehrichtung umkehrt. Der Zahlenwert der Gesamtübersetzung ändert sich dann geringfügig.

Die Stufenplaneten 5 können nach einem Verfahren hergestellt werden, bei dem zunächst die Verzahnungen der Stufenräder 4 und 6 durch Stoßen hergestellt werden. Nach dem Härten (Einsatzhärtung) kann sich ein weiteres Bearbeiten durch Hartstoßen anschließen. Die Verzahnung wird abschließend durch Honen fertiggestellt.

Bei einem weiteren Herstellungsverfahren der Stufenplaneten werden die Stufenräder 4 und 6 aufgetrennt. Die Verzahnung wird in der vorstehend beschriebenen Weise fertigbearbeitet. Im Anschluß hieran werden die Stufenräder 4 und 6 zueinander ausgerichtet und miteinander verschweißt.

### Bezugszeichen

- 1: Planetengetriebe
- 2: Eingangswelle
- 3: Sonnenrad
- 4: Stufenrad
- 5: Stufenplanet
- 6: Stufenrad
- 7: Achse
- 8: Lager
- 9: Lager
- 10: Planetenträger
- 11: Hohlrad
- 12: Hohlrad
- 13: Abtriebsflansch
- 14: Gehäuse
- 15: Distanzscheibe
- 16: O-Ring
- 17: Radialwellendichtring
- 18: Kreuzrollenlager
- 19: Wälzlager
- 20: Mitnahmeverzahnung

## Patentansprüche

1. Planetengetriebe (1) mit einem ersten und einem zweiten, jeweils innen- und konisch verzahnten Hohlrad (11, 12), von denen das erste feststeht und das zweite drehantreibbar gelagert ist und den Abtrieb bildet, und Stufenplaneten (5) mit konisch verzahnten Stufenrädern (4, 6), die in einem Planetenträger (10) in der Weise gelagert sind, daß sie in ständigem Zahneingriff mit den beiden Hohlrädern (11, 12) stehen, dadurch **gekennzeichnet**, daß die Neigungswinkel (Konus-Richtungen) der Verzahnungen der Stufenräder (4, 6) jedes Stufenplaneten (5) sowie der Hohlräder (11, 12) zueinander entgegengesetzt verlaufen.

2. Planetengetriebe nach Anspruch 1, dadurch **gekennzeichnet**, daß die Stufenplaneten (5) mit axialem Spiel im Planetenträger (10) gelagert sind.

3. Planetengetriebe nach den Ansprüchen 1 und 2, dadurch **gekennzeichnet**, daß der Planetenträger (10) in bezug auf die Hohlräder (11, 12) schwimmend gelagert ist.

4. Planetengetriebe nach den Ansprüchen 1 bis 3, dadurch **gekennzeichnet**, daß die konischen Verzahnungen der Hohlräder (11, 12) so geneigt sind, daß die aus den Zahneingriffen der Hohl- und Stufenräder resultierenden Axialkräfte entgegengesetzt gerichtet und im wesentlichen gleich groß sind.

5. Planetengetriebe nach Anspruch 1, dadurch **gekennzeichnet**, daß die Verzahnungen der Hohl- und Stufenräder (11, 12 bzw. 4, 6) konisch und schrägverzahnt ausgebildet sind.

6. Planetengetriebe nach Anspruch 1, dadurch **gekennzeichnet**, daß die Stufenräder (4, 6) Verzahnungen mit jeweils gleichen Zähnezahlen aufweisen.

7. Planetengetriebe nach Anspruch 6, dadurch **gekennzeichnet**, daß die Verzahnungen der Hohl- und Stufenräder (11, 12 bzw. 4, 6) unterschiedliche Module aufweisen.

8. Planetengetriebe nach Anspruch 1, dadurch **gekennzeichnet**, daß der axiale Abstand zwischen den Hohlrädern (11, 12) über eine Distanzscheibe (15) einstellbar ist.

9. Planetengetriebe nach Anspruch 1, dadurch **gekennzeichnet**, daß der Neigungswinkel der Verzahnung an jedem Hohlrad (11, 12) - in der Berührungszone der Zahnflanke gemessen - mindestens 20 % des Teilkreis-Schrägungswinkels des betreffenden Hohlrades beträgt.

10. Planetengetriebe nach Anspruch 1, dadurch **gekennzeichnet**, daß ein Sonnenrad (3) in einem der beiden Hohlräder (11, 12) gelagert ist.

11. Planetengetriebe nach Anspruch 5, dadurch **gekennzeichnet**, daß die Schrägverzahnungen gleichen Richtungssinn und etwa gleiche Steigungsmaße aufweisen.

12. Planetengetriebe nach Anspruch 7, dadurch **gekennzeichnet**, daß die Verzahnungen der Hohl- und Stufenräder (11, 12 bzw. 4, 6) unterschiedliche Module aufweisen, die so gewählt sind, daß sich annähernd gleiche Betriebseingriffswinkel ergeben.

13. Planetengetriebe nach Anspruch 1, dadurch **gekennzeichnet**, daß die Differenz der Zähnezahlen der Hohlräder (11, 12) der zweifachen Anzahl der Stufenplaneten (5) entspricht.

14. Planetengetriebe nach Anspruch 1, dadurch **gekennzeichnet**, daß die Achsen (7) der Stufenplaneten (5) in bezug auf eine Eingangswelle (2) parallel gerichtet verlaufen.

15. Planetengetriebe nach Anspruch 1, dadurch **gekennzeichnet**, daß die Verzahnungen der Stufenräder (4, 6) durch Stoßen, Einsatzhärtung, nachfolgendem Hartstoßen und abschließendem Honen hergestellt sind.

16. Planetengetriebe nach Anspruch 1, dadurch **gekennzeichnet**, daß die Stufenplaneten (5) durch Trennen der Stufenräder (4, 6), Herstellung der Verzahnung, Ausrichten der Stufenräder zueinander und abschließendem Zusammenfügen durch Schweißen hergestellt sind.

17. Planetengetriebe (1) nach Anspruch 1, dadurch **gekennzeichnet**, daß der Planetenträger (10) über eine Räderanordnung angetrieben wird.

18. Planetengetriebe (1) nach Anspruch 1, dadurch **gekennzeichnet**, daß ein Sonnenrad (3), welches sich in ständigem Zahneingriff mit den Stufenplaneten (5) befindet, angetrieben ist.

## Claims

1. Planetary gear (1) comprising a first and a second, in each case internally and conically geared ring gear (11, 12), of which the first is fixed and the second is rotatably supported and forms the output, and step planets (5) with conically geared step wheels (4, 6), which are supported in a planet carrier (10) so as to be in constant mesh with the two ring gears (11, 12), characterized in that the angles of inclination (cone directions) of the gearings of the step wheels (4, 6) of each step planet (5) as well as of the ring gears (11, 12) extend in mutually opposite directions.

2. Planetary gear according to claim 1, characterized in that the step planets (5) are supported with axial play in the planet carrier (10).

3. Planetary gear according to claims 1 and 2, characterized in that the planet carrier (10) is float-mounted relative to the ring gears (11, 12).

4. Planetary gear according to claims 1 to 3,
characterized in that the conical gearings of the ring gears (11, 12) are so inclined that the axial forces resulting from the meshings of the ring gears and step wheels are oppositely directed and substantially equal in magnitude.

5. Planetary gear according to claim 1, characterized in that the gearings of the ring gears and step wheels (11, 12 and 4, 6 respectively) are conical and helically formed.

6. Planetary gear according to claim 1, characterized in that the step wheels (4, 6) have gearings with in each case identical tooth numbers.

7. Planetary gear according to claim 6, characterized in that the gearings of the ring gears and step wheels (11, 12 and 4, 6 respectively) have different modules.

8. Planetary gear according to claim 1, characterized in that the axial clearance between the ring gears (11, 12) is adjustable by means of a spacer disk (15).

9. Planetary gear according to claim 1, characterized in that the angle of inclination of the gearing on each ring gear (11, 12) - measured in the contact zone of the tooth flank - is at least 20% of the pitch angle of inclination of the relevant ring gear.

10. Planetary gear according to claim 1, characterized in that a sun wheel (3) is supported in one of the two ring gears (11, 12).

11. Planetary gear according to claim 5, characterized in that the helical gearings extend in the same direction and have approximately identical spiral lead dimensions.

12. Planetary gearing according to claim 7, characterized in that the gearings of the rinc gears and step wheels (11, 12 and 4, 6 respectively) have different modules, which are so selected that approximately identical effective pressure angles arise.

13. Planetary gear according to claim 1, characterized in that the difference between the tooth numbers of the ring gears (11, 12) corresponds to twice the number of step planets (5).

14. Planetary gear according to claim 1, characterized in that the axles (7) of the step planets (5) extend in a parallel direction in relation to an input shaft (2).

15. Planetary gear according to claim 1, characterized in that the gearings of the step wheels (4, 6) are manufactured by shaping, case hardening, subsequent hard shaping and finally honing.

16. Planetary gear according to claim 1, characterized in that the step planets (5) are manufactured by separating the step wheels (4, 6), manufacturing the gearing, mutually aligning the step wheels and finally joining them together by welding.

17. Planetary gear (1) according to claim 1, characterized in that the planet carrier (10) is driven by a wheel arrangement.

18. Planetary gear (1) according to claim 1, characterized in that a sun wheel (3), which is in constant mesh with the step planets (5), is driven.

## Revendications

1. Engrenage planétaire (1) comportant une première et une deuxième couronnes coniques, dentées intérieurement (11, 12), dont la première est fixe et dont la deuxième est agencée pour être entraînée en rotation et constitue l'arbre de sortie, ainsi que des planétaires à étages (5) comportant des roues à étages (4, 6) qui sont montées dans un porte-planétaire (10), de telle manière qu'elles soient en prise de façon permanente avec les deux couronnes dentées (11, 12), **caractérisé en ce que** les angles d'inclinaison (orientation des cônes) des dents des roues à étages (4, 6) de chaque planétaire à étages (5) et de celles des couronnes dentées (11, 12) sont orientés de façon opposée l'un par rapport à l'autre.

2. Engrenage planétaire selon la revendication 1, **caractérisé en ce que** les planétaires à étages (5) sont montés dans le porte-planétaire (10) avec un jeu axial.

3. Engrenage planétaire selon les revendications 1 et 2, **caractérisé en ce que** le porte-planétaire (10) est monté flottant par rapport aux couronnes dentées (11, 12).

4. Engrenage planétaire selon les revendications 1 à 3, **caractérisé en ce que** les couronnes coniques dentées (11, 12) sont inclinées de telle manière que les forces axiales résultant de l'engrènement des dents des couronnes dentées avec celles des roues à étages sont opposées et sensiblement égales.

5. Engrenage planétaire selon la revendication 1, **caractérisé en ce que** les dents des couronnes dentées et des roues à étages (11, 12, respectivement 4, 6) sont coniques et obliques.

6. Engrenage planétaire selon la revendication 1, **caractérisé en ce que** les roues à étages (4, 6) comportent des dentures respectives ayant le même nombre de dents.

7. Engrenage planétaire selon la revendication 1, **caractérisé en ce que** les dents respectives des couronnes dentées et des roues à étages (11, 12, respectivement 4, 6) présentent des profils différents.

8. Engrenage planétaire selon la revendication 1, **caractérisé en ce que** l'écart axial entre les roues à étages (11, 12) est réglable au moyen d'un disque d'espacement (15).

9. Engrenage planétaire selon la revendication 1, **caractérisé en ce que** l'angle d'inclinaison des dents de chaque couronne dentée (11, 12) mesuré dans la zone de contact des flancs des dents représente au moins 20% de l'angle d'inclinaison du cercle primitif de la couronne dentée concernée.

10. Engrenage planétaire selon la revendication 1, **caractérisé en ce qu'**une roue solaire (3) est montée à l'intérieur de l'une des deux couronnes dentées (11, 12).

11. Engrenage planétaire selon la revendication 7, **caractérisé en ce que** les dents obliques ont sensiblement la même orientation et sensiblement la même pente.

12. Engrenage planétaire selon la revendication 7, **caractérisé en ce que** les dents des couronnes dentées, et des roues à étages (11, 12, respectivement 4, 6) ont des profils différents, choisis de telle manière que les angles d'engrènement sont sensiblement identiques.

13. Engrenage planétaire selon la revendication 1, **caractérisé en ce que** la différence du nombre de dents des couronnes dentées (11, 12) correspond au double du nombre de planétaires à étages (5).

14. Engrenage planétaire selon la revendication 1, **caractérisé en ce que** les axes (7) des planétaires à étages (5) sont parallèles à l'arbre d'entrée (2).

15. Engrenage planétaire selon la revendication 1, **caractérisé en ce que** les dents des roues à étages (4, 6) sont réalisées par repoussage, par cémentage, par un durcissement par repoussage ultérieur et finalement par honage.

16. Engrenage planétaire selon la revendication 1, **caractérisé en ce que** les planétaires à étages (5) sont réalisés en séparant les roues à étages (4, 6), en formant les dents, en redressant les roues l'une par rapport à l'autre et finalement en les accouplant par soudure.

17. Engrenage planétaire selon la revendication 1, **caractérisé en ce que** le porte-planétaire (10) est entraîné par un engrenage.

18. Engrenage planétaire selon la revendication 1, **caractérisé en ce que** la roue solaire (3), qui est en prise permanente avec les planétaires à étages, est entraînée.
